# EUROPÄISCHE PATENTSCHRIFT

(11) **EP 2 338 323 B1**
(45) Veröffentlichungstag und Bekanntmachung des Hinweises auf die Patenterteilung: **03.10.2012**
(21) Anmeldenummer: 10401209.1
(22) Anmeldetag: 03.12.2010
(51) Int. Cl.: A01C 17/00

(54) **Schleuderstreuer**
Centrifugal spreader
Epandeur d'engrais centrifuge

(30) Priorität: 12.12.2009 DE 102009044853
(43) Veröffentlichungstag der Anmeldung: 29.06.2011
(73) Patentinhaber: Amazonen-Werke H. Dreyer GmbH & Co. KG, 49205 Hasbergen (DE)
(72) Erfinder: Johannaber, Stefan Jan, 49536, Lienen (DE); Krabbe, Ulrich, 49205, Hasbergen (DE); Wiebusch, Thorsten, 49205, Hasbergen (DE); Bäumker, Herbert, 49176, Hilter (DE); Lampert, Tobias, 49504, Lotte (DE)

(56) Entgegenhaltungen:
- EP-A2- 0 385 091
- EP-A2- 1 247 437
- DE-A1- 4 108 855
- DE-A1- 19 626 348

## Beschreibung

Die Erfindung betrifft einen Schleuderstreuer gemäß des Oberbegriffes des Patentanspruches 1.

Ein derartiger Schleuderstreuer ist beispielsweise in der DE 196 26 348 A1 beschrieben. Dieser Schleuderstreuer weist eine Auslauföffnung auf, die durch einen Schieber verschließbar ist. An dem Schieber ist unterhalb der Auslauföffnung ein einem Auslaufschacht ähnliches Leitelement angeordnet. Dieses Leitelement ist kastenartig ausgebildet und weist bis auf die Schieberkante, die die Größe der Auslauföffnung einstellt, einen völlig anderen Querschnitt als die Auslauföffnung auf. Die Auslauföffnung bildet zusammen mit dem verstellbaren Schieber die Dosiervorrichtung.

Dieses an dem Dosierschieber angeordnete und Leitwände aufweisende Leitelement weist eine völlig von der Kontur der Auslauföffnung bzw. des eingestellten Öffnungsquerschnittes unabhängigen Verlauf der Leitwände auf.

Durch die EP 03 85 091, B1 ist ein weiterer Schleuderstreuer bekannt geworden, der unterhalb der Auslauföffnung an der Bodenplatte, in welcher die Auslauföffnung angeordnet ist, ein Leitwände aufweisende Leitelement aufweist. Dieses einem Auslaufschacht ähnlichen Leitelement weist einen von der Kontur der Auslauföffnung zumindest teilweise unabhängigen Verlauf der Leitwände auf.

Der Erfindung liegt die Aufgabe zugrunde, einen eine verbesserte Materialstrom führenden Auslaufschacht, der keine nennenswerte Beeinflussung auf die Auslaufmenge aus dem eingestellten Querschnitt der Auslauföffnung aufweist und darüber hinaus Spritzverluste vermindert, zu schaffen.

Diese Aufgabe wird erfindungsgemäß dadurch gelöst, dass zumindest die unteren Bereiche der gesamten Leitwände der Leitelemente gegenüber dem Konturenverlauf der Auslauföffnung jeweils nach außen in erweiternder Weise versetzt angeordnet sind, dass in dem Versetzungsbereich der Leitelemente zumindest im Bereich der Auslauföffnung nach außen sich eine parallel zur Dosierplatte verlaufende Entspannungsfläche befindet, in der eine entsprechend der Kontur der Auslauföffnung verlaufende Nut angebracht ist.

Infolge dieser Maßnahmen wird auch bei einer Ausbringmengenerhöhung durch Einstellung eines größeren freigegebenen Querschnitte der Auslauföffnung ein Rückstau in dem aus der Auslauföffnung zu den Wurfschaufeln strömenden Düngerstrahl vermieden bzw. erheblich reduziert. Dies wird insbesondere durch die über den gesamten Umfangsbereich der Auslauföffnung verlaufenden Entspannungsflächen erreicht, die durch den Versatz der gesamten Leitwände der Leitelemente im Umfangsbereich der Auslauföffnungen versetzt zu der Auslaufkontur angeordnet sind. Die Leitwände sind beabstandet zu der Auslauföffnung angeordnet.

Als besonders vorteilhaft hat sich die in der Entspannungsfläche angeordnete Nut gezeigt. Die Nut verringert bzw. verhindert Spritzverluste von Düngermaterial im Schleuderscheiben- und/oder Dosierbereich beim Eintauchen der Wurfschaufel in den Düngerstrahl, weil die von der Wurfschaufel abgelenkten Düngerkörner sich in der Nut der Entspannungsfläche beruhigen, von der Nut eingefangen und nach unten in Richtung der Schleuderscheibe und der Wurfschaufel umgelenkt werden.

Ein besonders gutes Einfangen der abgelenkten Düngerkörner und Umlenken nach unten wird dadurch erreicht, dass die Nut einen kreisbogenförmigen Querschnitt aufweist.

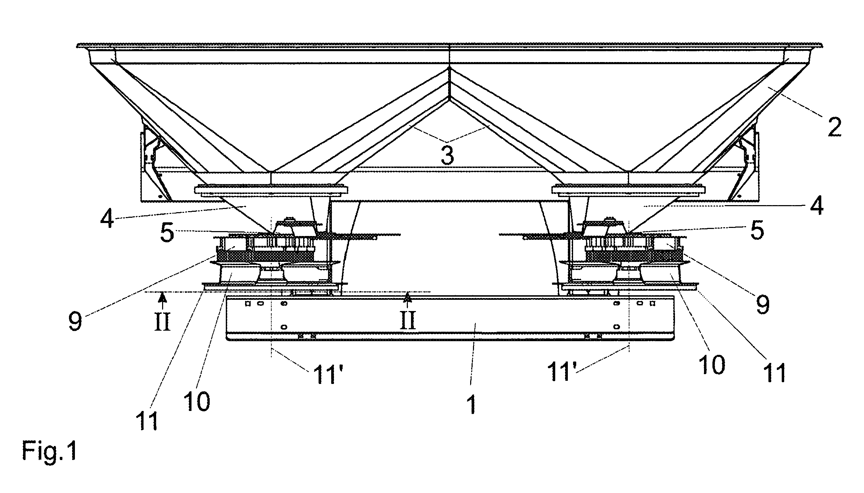

Weitere Einzelheiten der Erfindung sind der Beispielsbeschreibung und den Zeichnungen zu entnehmen. Hierbei zeigen
- Fig. 1: den Schleuderstreuer in der Ansicht von hinten,
- Fig. 2: das in Fahrtrichtung gesehen linken Dosierorgan in der Ansicht II - II,
- Fig. 3: das linke Dosierorgan bestehend aus Auslauföffnung mit Dosierschieber und Leitelement in perspektivischer Ansicht von unten,
- Fig. 4: das Dosierelement in der Ansicht gemäß Fig. 3, jedoch in Explosionsdarstellung,
- Fig. 5: die Zuordnung von Wurfschaufel, Leitelement, Schieber und Auslauföffnung in der Ansicht V - V und
- Fig. 6: die Zuordnung von Wurfschaufel und Nut in der Entspannungsfläche des Leitelementes in der Darstellungsweise nach Fig. 5 in vergrößertem Maßstab und Teilansicht.

Der Schleuderstreuer weist einen Rahmen 1 mit daran angeordnetem Vorratsbehälter 2 auf. Der Vorratsbehälter 2 ist durch ein dachförmiges Mittelteil 3 in zwei trichterförmige Auslaufbereiche 4 aufgeteilt. Die unteren Enden der Auslaufbereiche 4 werden durch eine Dosiereinrichtung 5 abgeschlossen. Jede Dosiereinrichtung 5 besteht aus einer in einer Bodenplatte 6 angeordneten Auslauföffnung 7, die über einen Schieber 8 in ihrer Öffnungsweite einstellbar und zu verschließen ist. Unterhalb der Auslauföffnung 7 ist ein nach unten die Auslauföffnung 7 verlängernder einem Auslaufschacht ähnliches Leitelement 9 am Dosierschieber 8 angeordnet. Aus der Auslauföffnung 7 tritt der Streugutstrom im Fallstrom strahlartig aus und wird in einstellbaren Mengen der jeweils unterhalb der Dosiereinrichtung 5 angeordneten und mit Wurfschaufeln 10 besetzten Schleuderscheibe 11 zugeführt. Die Schleuderscheiben 11 werden von einer Kraftquelle in bekannter Weise rotierend angetrieben.

Die Auslauföffnung 7 ist versetzt zu der Achse 11', um welche die Schleuderscheibe 11 umläuft, angeordnet. Die Wurfflügel 10, die auf der Schleuderscheibe 11 angeordnet sind, erstrecken sich über die gesamte radiale Ausdehnung des Streugutstrahles in Richtung zum Umfang der Schleuderscheibe 11. Das Leitelement 9 endet nahe der Oberseite des Wurfflügels 10.

Mittels des Dosierschiebers 8 ist die Auslauföffnung 7 zu verschließen und ihre Öffnungsweite einzustellen. Das Leitelement 9 ist an dem Dosierschieber 8 befestigt und weist Leitwände 12, 13, 14 auf. Die der Dosierkante 15 des Dosierschiebers 8 zugeordnete Leitwand 13 weist zumindest annähernd die Kontur der Dosierkante 15 des Dosierschiebers 8 auf. Die sich an den Bereich der Dosierkante 15 zugeordneten Leitwand 13 sich anschließenden Leitwände 12 und 13 weisen einen an den Konturenverlauf des Seitenbereiches der Auslauföffnung 7 zumindest annähernd angepassten Konturenverlauf auf, wie die Zeichnungen zeigen.

Der Dosierschieber 8 ist mittels einer eine Gelenkachse 16 aufweisenden Gelenkanordnung 17 verschwenkbar an der Bodenplatte 6 der Dosiervorrichtung 5 angeordnet. Die seitlichen Leitwände 12, 14 sind Kreisabschnitte, deren Kreismittelpunkt zumindest annähernd mit der Gelenkachse 16 des Dosierschiebers 8 zusammenfällt. Das Leitelement 9 weist auf der der Dosierkante 15 des Schiebers 8 abgewandten Seite keine Leitwand auf. Hierdurch können die Wurfflügel 10 von der offenen Seite 18 in die von den Leitwänden 12, 13, 14 gebildeten Auslaufschacht des Leitelementes 8 gemäß Pfeilrichtung 19 eintreten.

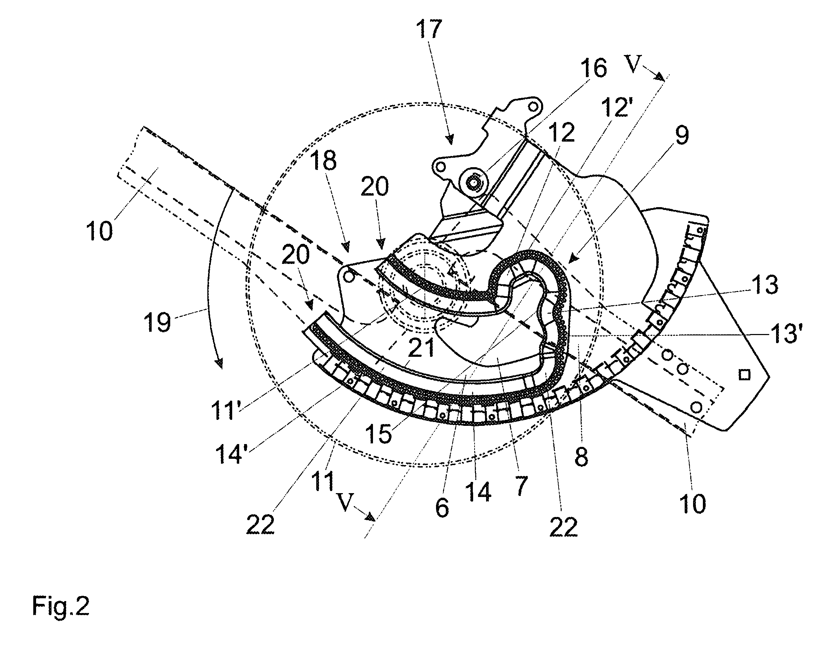

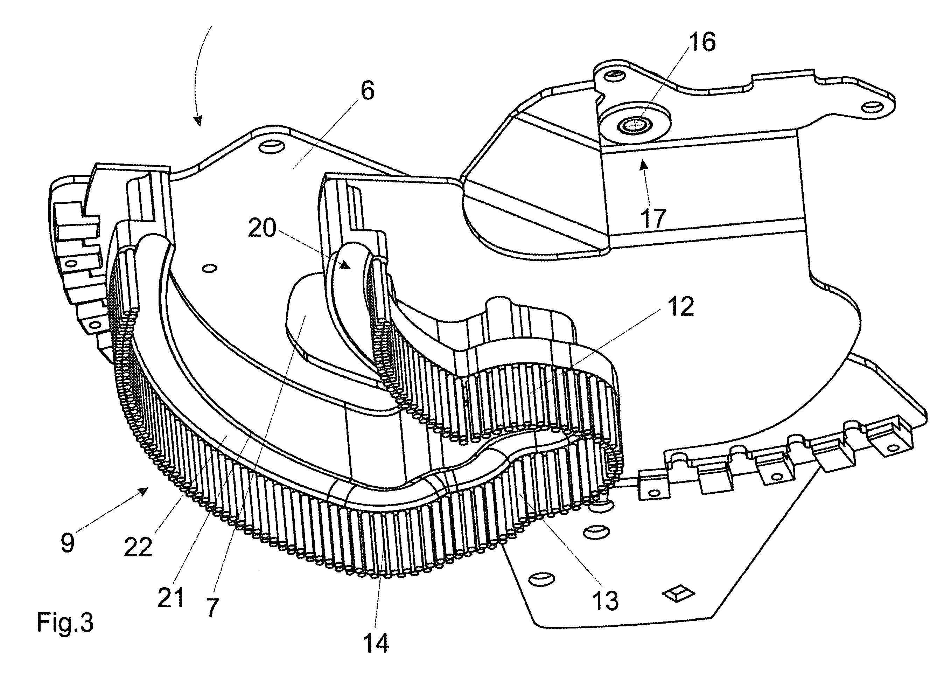

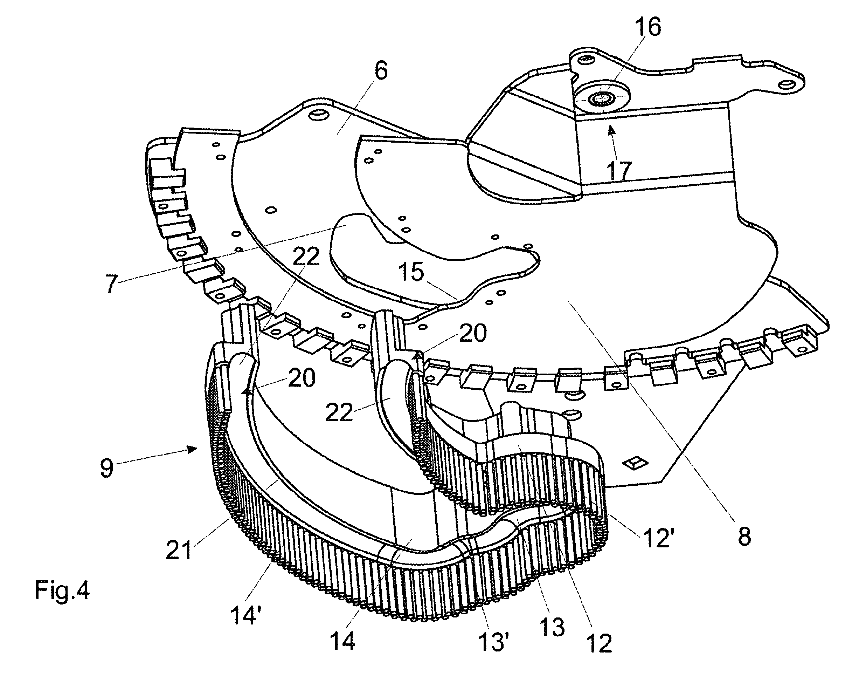

Das einem Auslaufschacht ähnliche Leitelement 9 verlängert die Auslauföffnung 7 nach unten. Aus der Auslauföffnung 7 bzw. dem durch den Schieber 8 freigegebenen Querschnitt der Auslauföffnung 7 tritt das Streugut im Fallstrom strahlartig aus. Die Schleuderscheibe 11 wird um eine versetzt zu der Auslauföffnung 7 und zum Leitelement 9 angeordnete Achse 11' umlaufend angetrieben. Die Wurfflügel 10 erstrecken sich über die gesamte radiale Ausdehnung des Streugutstrahles in Richtung zum Umfang der Schleuderscheibe 11. Das Leitelement 9 endet nahe der Oberseite der Wurfflügel 10. Das Leitelement 9 weist Leitwände 12, 13, 14 auf. Zumindest die unteren Bereiche 12', 13' 14' der gesamten Leitwände 12, 13, 14 des Leitelementes 9 sind versetzt gegenüber dem Konturenverlauf der Auslauföffnung 7 jeweils in nach außen erweitender Weise angeordnet, wie insbesondere die Fig. 2, 3 und 5 zeigen. Die Wände 12, 13, 14 des Leitelementes 9 sind U-förmig und entsprechend dem Konturenverlauf der Auslauföffnung 7 ausgestaltet. Die Leitwände 12, 13, 14 des Leitelementes weisen einen Versetzungsbereich 20 auf, so dass die unteren Bereiche 12', 13' 14' der gesamten Leitwände 12, 13, 14 gegenüber dem Konturenverlauf der Auslauföffnung 7 in nach außen erweitender Weise versetzt zu den den unmittelbar der Auslauföffnung 7 benachbarten Bereichen zugeordnet sind. In dem Versetzungsbereich 20 der Leitelemente 12, 13, 14 im Bereich der Auslauföffnung 7 befindet sich eine sich parallel zur Dosierplatte 6 verlaufende Entspannungsfläche 21, welche dem Konturenverlauf der Auslauföffnung 7 im Bereich der U-förmigen Anordnung der Leitwände 12, 13, 14 im Bereich der Auslauföffnung 7folgt. In dieser Entspannungsfläche 21 ist eine entsprechend der Kontur der Auslauföffnung 7 verlaufende Nut 22 angebracht. Diese Nut 22 weist einen kreisförmigen Querschnitt auf, wie die Fig. 3 bis 6 zeigen.

Die Wirkungsweise der versetzten Anordnung der unteren Bereiche 12', 13', 14' der Leitwände 12, 13, 14 des Leitelementes 9 in ihrem zumindest unteren Bereich, der Entspannungsfläche 21 und der Nut 22 ist folgende:

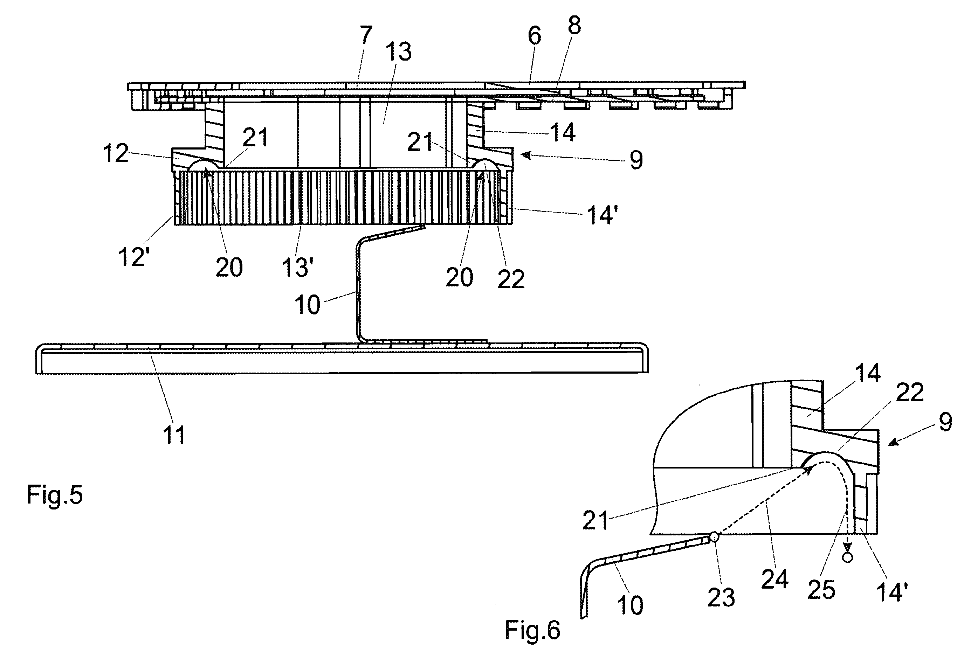

Wenn die jeweilige Wurfschaufel 10 in de Streugutstrom eintritt, werden durch die Wurfschaufeln 10, wie Fig. 6 zeigt, einige Düngerkörner 23 abgelenkt, wie der Pfeil 24 zeigt und können sich im Bereich der Entspannungsfläche 21 und der Nut 22 quasi beruhigen. Durch den kreisbogenförmigen Querschnitt der Nut 22 werden die Düngerkörner 23 nach unten umgelenkt, wie der Pfeil 25 in Fig. 6 zeigt. Durch die umlaufende Nut wird eine Verringerung der Menge des im Fallstrom durch den freigegebenen Öffnungsschnitt bei geringer Fallhöhe austretenden Düngermenge nicht wesentlich gegenüber einer größeren Fallhöhe zumindest verringert.

## Patentansprüche

1. Schleuderstreuer für rieselfähiges Gut, insbesondere Dünger, mit einem Vorratsgehälter (2) mit wenigstens einer einstellbaren und in einer Dosierplatte (6) angeordneten Auslauföffnung (7) und diese nach unten verlängernden einem Auslaufschacht ähnlichen Leitelement (9) aus dem das Streugut im Fallstrom strahlartig austritt, und einer darunter um eine versetzte Auslauföffnung zum Leitelement (9) angeordnete Achse umlaufenden Schleuderscheibe mit wenigstens einem Wurfflügel (10), der sich über die gesamte radiale Ausdehnung des Streugutstahls in Richtung zum Umfang der Schleuderscheibe erstreckt und nahe dessen Oberseite das Leitelement (9) endet, wobei die Auslauföffnung mittels eines Dosierschiebers (8) zu verschließen und in ihrer Öffnungsweite einzustellen ist, wobei das Leitelement (9) an dem Dosierschieber angeordnet ist und Leitwände (12, 13, 14) aufweist, **dadurch gekennzeichnet, dass** das Leitelement (9) auf seiner der Dosierkante (15) des Dosierschiebers (8) abgewandten seite keine Leitwand aufweist, dass die Leitwände (12,13,14) des Leitelementes (9) U-förmig angeordnet sind und dass zumindest die unteren Bereiche (12', 13', 14') der gesamten Leitwände (12, 13, 14) des Leitelementes (9) gegenüber dem Konturenverlauf der Auslauföffnung (7) zur Schaffung eines Versetzungsbereiches (20) jeweils nach außen in erweiternder Weise versetzt angeordnet sind, dass in dem Versetzungsbereich (20) der U-förmig angeordneten Leitwände 812, 13, 14) des Leitelementes (9) zumindest im Bereich der Auslauföffnung (7) nach außen sich eine parallel zur Dosierplatte (6) verlaufende Entspannungsfläche (21) befindet, in der eine entsprechend der Kontur der Auslauföffnung (7) verlaufende Nut (22) angebracht ist.

2. Schleuderstreuer nach Anspruch 1, **dadurch gekennzeichnet, dass** die Nut (22) einen kreisbogenförmigen Querschnitt aufweist.

## Claims

1. Centrifugal spreader for pourable material, in particular fertilizer, having a storage container (2) having at least one settable discharge opening (7) which is arranged in a metering plate (6), and a guide element (9) which extends said discharge opening (7) downwardly and is similar to a discharge shaft, out of which the material to be spread emerges in a downward flow in the manner of a jet, and having thereunder a centrifugal disc which rotates about an axis that is arranged in an offset manner with respect to the discharge opening and to the guide element (9), said centrifugal disc having at least one disc vane (10) which extends over the entire radial extent of the spreading material jet in the direction towards the circumference of the centrifugal disc, the guide element (9) ending close to the top side of said disc vane (10), wherein the discharge opening is intended to be closed by means of a metering slide (8) and its opening width is intended to be set, wherein the guide element (9) is arranged on the metering slide and has guide walls (12, 13, 14), **characterized in that** the guide element (9) has no guide wall on its side remote from the metering edge (15) of the metering slide (8), **in that** the guide walls (12, 13, 14) of the guide element (9) are arranged in a U-shaped manner, and **in that** at least the lower regions (12', 13', 14') of all the guide walls (12, 13, 14) of the guide element (9) are arranged in each case in a manner widening outwardly in an offset manner with respect to the contour of the discharge opening (7) in order to create an offset region (20), **in that** a stress-relieving area (21) that extends parallel to the metering plate (6) is located in the offset region (20) of the guide walls (12, 13, 14), arranged in a U-shaped manner, of the guide element (9) at least in the region of the discharge opening (7) towards the outside, a groove (22) that extends in a manner corresponding to the contour of the discharge opening (7) being introduced into said stress-relieving area.

2. Centrifugal spreader according to Claim 1, **characterized in that** the groove (22) has a circularly arcuate cross section.

## Revendications

1. Epandeur centrifuge de produits susceptibles de ruisseler notamment de l'engrais, comprenant :
- un réservoir d'alimentation (2) ayant au moins un orifice de sortie (7) réglable, dans une plaque de dosage (6) et un élément de guidage (9) prolongeant l'orifice de sortie vers le bas, analogue à une trémie de sortie d'où le produit d'épandage sort suivant une veine descendante en forme de jet et
sous celui-ci un disque d'épandage tournant autour d'un axe décalé par rapport à l'orifice de sortie de l'élément de guidage (9), le disque étant équipé de palettes d'éjection (10) s'étendant sur toute l'extension radiale du jet de produit d'épandage en direction de la périphérie du disque d'épandage et l'élément de guidage (9) se termine à proximité de son côté supérieur,
- l'orifice de sortie étant réglable en degré d'ouverture et de fermeture par un tiroir de dosage (8),
- l'élément de guidage (9) étant installé sur un tiroir de dosage et ayant des parois de guidage (12, 13, 14),
épandeur **caractérisé en ce que**
- l'élément de guidage (9) ne comporte pas de paroi de guidage sur son côté non tourné vers l'arête de dosage (15) du tiroir de dosage (8),
- les parois de guidage (12, 13, 14) de l'élément de guidage (9) sont disposées sur une forme de U et,
- au moins les zones inférieures (12', 13', 14') de l'ensemble des parois de guidage (12, 13, 14) de l'élément de guidage (9) sont décalées par rapport au tracé du contour de l'orifice de sortie (7) pour créer une zone décalée (20) élargie vers l'extérieur,
- dans la zone décalée (20) des parois de guidage (12, 13, 14) disposées en forme de U de l'élément de guidage (9), au moins dans la région de l'orifice de sortie (7), vers l'extérieur, il y a une surface de détente (21) parallèle à la plaque de dosage (6) et munie d'une rainure (22) correspondant au contour de l'orifice de sortie (7).

2. Epandeur centrifuge selon la revendication 1, **caractérisé en ce que** la rainure (22) a une section en arc de cercle.
